# EUROPÄISCHE PATENTSCHRIFT

(11) **EP 4 622 895 B1**
(45) Veröffentlichungstag und Bekanntmachung des Hinweises auf die Patenterteilung: **23.09.2026**
(21) Anmeldenummer: 23802173.7
(22) Anmeldetag: 03.11.2023
(51) Int. Cl.: B65G 17/06, B65G 17/38

(54) **SCHARNIERBANDFÖRDERER MIT SCHUTZSCHILD**
HINGED BELT CONVEYOR WITH PROTECTIVE SHIELD
CONVOYEUR À BANDE CHARNIÈRES AVEC BOUCLIER DE PROTECTION

(30) Priorität: 21.11.2022 DE 102022130757
(43) Veröffentlichungstag der Anmeldung: 01.10.2025
(73) Patentinhaber: Kabelschlepp GmbH - Hünsborn, 57482 Wenden-Hünsborn (DE)
(72) Erfinder: DIEBEL, Michael, 35687 Dillenburg (DE)
(74) Vertreter: Neumann, Ditmar
(86) Internationale Anmeldenummer: PCT/EP2023/080735
(87) Internationale Veröffentlichungsnummer: WO 2024/110174

(56) Entgegenhaltungen:
- EP-A2- 1 857 383
- TSUBAKI KABELSCHLEPP GMBH: "Innovative solutions for the machine tool industry", HTTPS://T3.LAPPCDN.COM/, 22 March 2019 (2019-03-22), pages 1 - 28, XP093123451, Retrieved from the Internet <URL:https://t3.lappcdn.com/fileadmin/DAM/Miltronic_Sweden/4_Servicecenter/2_Nedladdningscenter/Kabelschlepp_Innovations-for-machine-tool-industry.pdf> [retrieved on 20240124]
- TSUBAKI KABELSCHLEPP GMBH: "WAVE-BELT CONVEYORS", TSUBAKI-KABELSCHLEPP.COM/, 30 September 2022 (2022-09-30), pages 1 - 7, XP093123442, Retrieved from the Internet <URL:https://tsubaki-kabelschlepp.com/en-int/products/conveyor-systems/wave-belt-conveyors/> [retrieved on 20240124]

## Beschreibung

Der Gegenstand der Erfindung betrifft einen Scharnierbandförderer, vorzugsweise für Metallabfälle wie Späne oder dergleichen.

Scharnierbandförderer für Metallabfälle wie Späne oder dergleichen sind bekannt. Sie werden für metallverarbeitende Maschinen eingesetzt, um Metallabfälle wie Späne oder dergleichen in einen Sammelbehälter zu fördern. Ein Scharnierbandförderer weist ein endloses Scharnierband auf, welches mit einer Betätigungseinrichtung verbunden ist. Das Scharnierband ist durch Glieder gebildet, die gelenkig miteinander verbunden sind. Die Glieder sind zumindest teilweise durch Platten aus verschleißfesten Stahlblechen gebildet. Eine solche Ausgestaltung eines Scharnierbandförderers ist bspw. durch die Druckschrift DE 31 01 209 A1 bekannt. Hierbei umfasst das Scharnierband einzelne, versetzt zueinander angeordnete Scharniere und Platten auf, die mit in die Scharniere eingeführten Bolzen gelenkig zusammengehalten werden. Aus der Druckschrift EP 1 857 383 A2 ist ein Scharnierbandförderer gemäß dem Oberbegriff des unabhängigen Anspruchs 1 bekannt. Ein Scharnierbandförderer kann ein rinnenartig ausgebildetes Gehäuse aufweisen, an dessen Seitenwänden Führungsschienen für das obere und das untere Trum des Scharnierbands befestigt sind.

Scharnierbandförderer werden auch dazu verwendet, um insbesondere Halbfabrikate bspw. in Form von Blechteilen, den Werkzeugbearbeitungsmaschinen zuzuführen. Ein Scharnierbandförderer kann auch zum Abtransport der durch die Werkzeugmaschine bearbeiteten Teile oder Zuschnitte verwendet werden. Dies ist bspw. bei Laserschneidmaschinen der Fall. Bei derartigen Laserschneidmaschinen besteht aufgrund der hohen Verarbeitungsgeschwindigkeit das Problem, dass die Laserschneidmaschine verlassenden Teile teilweise eine sehr hohe Temperatur aufweisen, wenn die Teile an Scharnierbandförderer abgegeben werden. Ist ein Scharnierbandförderer unterhalb eines Laserschneidkopfes angeordnet, so besteht die Gefahr, dass der Laserstrahl auf die Glieder des endlosen Scharnierförderbandes auftrifft und es zu einer Beschädigung des Scharnierbandes kommen kann.

Ein Scharnierbandförderer kann eine erhebliche Breite aufweisen. So ist bspw. bekannt, dass die Glieder eine Länge quer zur Förderrichtung des Scharnierbandes von mehr als 2000 mm haben können.

Dies vorangestellt liegt der vorliegenden Erfindung die Aufgabe zugrunde, einen Scharnierbandförderer mit einem endlosen Scharnierband anzugeben, dessen Betriebssicherheit insbesondere in Verbindung mit Laserbearbeitungsmaschinen erhöht wird.

Diese Aufgabe wird durch einen Scharnierbandförderer gemäß den Merkmalen des unabhängigen Patentanspruchs 1 gelöst. Vorteilhafte Ausgestaltung und Weiterbildungen sind in den jeweils abhängig formulierten Ansprüchen angegeben. Die in den Ansprüchen einzeln aufgeführten Merkmale sind in beliebiger, technologisch sinnvollerweise, miteinander kombinierbar und können durch erläuternde Sachverhalte aus der Beschreibung ergänzt werden, wobei weitere Ausführungsvarianten der Erfindung aufgezeigt werden.

Der erfindungsgemäße Scharnierbandförderer weist ein endloses Scharnierband und eine mit dem Scharnierband verbundene Betätigungseinrichtung auf. Die Betätigungseinrichtung ist dazu geeignet und bestimmt, eine Bewegung des endlosen Scharnierbandes zu erreichen. Die Betätigungseinrichtung kann einen Motor, insbesondere einen elektrischen Motor aufweisen, der mittelbar oder unmittelbar mit dem Scharnierband verbunden ist.

Das Scharnierband ist durch Glieder gebildet. Jedes Glied weist eine Unterplatte und eine Oberplatte auf. Die Unterplatten sind gelenkig miteinander verbunden. Bei dem erfindungsgemäßen Scharnierbandförderer sind die Unterplatte und die Oberplatte des Gliedes beabstandet zueinander angeordnet. Die Oberplatten bilden eine außen liegende Oberfläche, die eine im Wesentlichen spaltfreie Oberseite des Scharnierbandes bildet. Im Wesentlichen spaltfrei bedeutet in diesem Zusammenhang, dass überlappende Bereiche zweier benachbarter Oberplatten relativ zueinander beweglich sind. Auf dieser Seite des Scharnierbandes fallen bspw. Späne, die dann abtransportiert werden.

Die Oberplatte eines Gliedes ist mit der Unterplatte der Art verbunden, dass die Oberplatte parallel zu der Unterplatte und senkrecht in einer Längsrichtung des Scharnierbandes verschieblich ist.

Durch die erfindungsgemäße Konstruktion wird erreicht, dass eine thermische Belastung des Scharnierbandes, bspw. durch Einwirkung eines Laserstrahls, im Wesentlichen zu keiner Verformung des Scharnierbandes führt. Die im Wesentlichen spaltfreie Oberseite des Scharnierbandes bleibt erhalten. Dadurch, dass die Oberplatte eines Gliedes verschieblich mit der Unterplatte verbunden ist, wird der Oberplatte die Möglichkeit gegeben, sich bei einer thermischen Belastung auszudehnen, so dass Längenänderung der Oberplatte bedingt durch eine Wärmedehnung nicht zu einer Verformung des Gliedes führt.

Zur Vereinfachung der Montage sowie zum definierten Halten des Scharnierbandes während der Betätigung des Scharnierbandförderers wird vorgeschlagen, dass ein Endbereich der Oberplatte eines Gliedes fest mit der Unterplatte des Gliedes verbunden ist. Bei solch einer Ausgestaltung kann davon gesprochen werden, dass ein Endbereich der Oberplatte mit der Unterplatte ein Festlager bildet, wobei der andere Endbereich der Oberplatte mit der Unterplatte ein Loslager bildet, so dass die Oberplatte im gewissen Sinne schwimmend gelagert ist.

Zur Vereinfachung der Montage sowie zur Vereinfachung des Austausches einer Oberplatte wird nach einer weiteren Ausgestaltung des Scharnierbandes vorgeschlagen, dass die Oberplatte dies Gliedes ein sich senkrecht zu einer Längsrichtung des Scharnierbandes erstreckendes Langloch aufweist, durch welches sich ein die Oberplatte und die Unterplatte verbindendes Befestigungsmittel erstreckt.

In Abhängigkeit von der Ausgestaltung der Unterplatten, die gelenkig miteinander verbunden sind, kann es vorteilhaft sein, einen Abstandshalter zwischen der Unterplatte und der Oberplatte eines Gliedes vorzusehen. Durch den Abstandshalter wird der Abstand zwischen der Unterplatte und der Oberplatte eingestellt. Der Abstandshalter kann auch dazu dienen, mögliche Fertigungstoleranzen auszugleichen, um sicherzustellen, dass die Oberplatten eine im Wesentlichen spaltfreie Oberseite des Scharnierbandes bilden.

Ist ein Abstandshalter vorgesehen, ist es vorteilhaft, wenn sich das Befestigungsmittel durch den Abstandshalter hindurch erstreckt. Somit wird der Montageaufwand sowie die notwendige Anzahl der zur Verwirklichung des Scharnierbandes an Bauteilen reduziert. Des Weiteren wird hierdurch auch erreicht, dass keine zusätzlichen Hilfsmittel zur Festlegung des Abstandshalters notwendig sind.

Um eine hinreichend hohe Stabilität quer zur Längsrichtung des Scharnierbandes zu erreichen, wird nach einer weiteren vorteilhaften Ausgestaltung des Scharnierbandförderers vorgeschlagen, dass die Unterplatte eines Gliedes im Querschnitt profiliert ausgebildet ist. Besonders bevorzugt ist eine Ausgestaltung, bei der die Unterplatte U-förmig ausgebildet ist.

Eine noch weitere vorteilhafte Ausgestaltung des erfindungsgemäßen Scharnierbandförderers kann darin gesehen werden, dass die Oberplatte eines Gliedes Laschen aufweist, die sich auf der Unterplatte des Gliedes abstützen, so dass das Glied eine hohe Biegesteifigkeit aufweist.

Die Oberplatte ist, insbesondere bei der Verwendung des Scharnierbandförderes in Verbindung mit einer Laserbearbeitungsmaschiene vorzugsweise so ausgebildet, dass diese eine Laserbeständigkeit aufweist. Eine Laserbeständigkeit kann vorzugsweise dadurch erreicht werden, dass die Oberfläche der Oberplatte einen hohen Reflektionsgrad aufweist oder eine hohe Streuung des Laserlichts ermöglicht. Die Oberplatte eines Gliedes kann auch aus einem Material mit hoher spezifischen Wärmekapazität ausgebildet sein.

Die Ausgestaltung des Scharnierbandförderes hat auch den Vorteil, dass die Oberplatte bei Bedarf ausgetauscht werden kann, was mit einer hohen Servicefreundlichkeit einhergeht.

Weitere Vorteile und Einzelheiten der Erfindung werden anhand der in der Zeichnung dargestellten Figuren beschrieben.

Es zeigen:
- Fig. 1:: schematisch ein Ausführungsbeispiel eines Scharnierbandförderers,
- Fig. 2:: einen Ausschnitt des ersten Ausführungsbeispiels eines Scharnierbandes,
- Fig. 3:: einen Ausschnitt eines zweiten Ausführungsbeispiels eines Scharnierbandes und
- Fig. 4:: eine Ausführungsform einer Oberplatte.

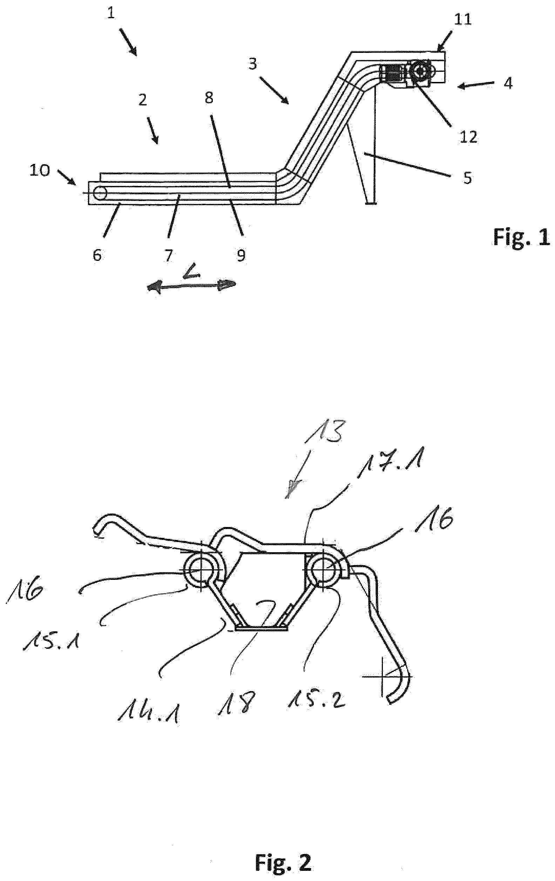

Fig. 1 zeigt schematisch in einer Ansicht einen Scharnierbandförderer 1. In dem dargestellten Ausführungsbeispiel weist der Scharnierbandförderer 1 einen im Wesentlich horizontal verlaufenden Aufgabebereich 2 auf. Der Aufgabebereich 2 geht in einen Steigungsbereich 3 über. Der Steigungsbereich 3 geht in dem dargestellten Ausführungsbeispiel mit einem im Wesentlichen horizontal verlaufenden Abwurfbereich 4 über. Der Steigungsbereich 3 und der Abwurfbereich 4 sind durch ein Gestell 5 gehalten.

Innerhalb eines Gehäuses 6 des Scharnierbandförderers 1 ist ein endloses Scharnierband 7 angeordnet. Das Scharnierband 7 weist einen Obertrum 8 mit einer Oberseite und einen Untertrum 9 auf. Mit dem Bezugszeichen 10 ist ein erster Umlenkbereich im Aufgabebereich 2 bezeichnet. Ein zweiter Umlenkbereich 11 ist im Abwurfbereich 4 vorgesehen. Im Umlenkbereich 11 ist eine Betätigungseinrichtung 12 angeordnet. Die Betätigungseinrichtung 12 umfasst vorzugsweise einen Elektromotor, der mittelbar oder unmittelbar mit einem Antriebsrad zum Antrieb des Scharnierbandes verbunden ist. Die in der Fig. 1 dargestellte Bauform des Scharnierbandförderers 1 ist beispielhaft. So kann der Scharnierbandförderer eine gerade Bauform in eine gerade und eine steigende Bauform abändern.

In der Fig. 2 ist ein erstes Ausführungsbeispiel des grundsätzlichen Aufbaus eines Scharnierbandes 7 dargestellt. Die Fig. 2 zeigt lediglich einen Ausschnitt eines Scharnierbandes.

Das Scharnierband wird durch Glieder 13 gebildet. Die Glieder 13 sind gelenkig miteinander verbunden. Aus der Darstellung nach Fig. 2 ist ersichtlich, dass das Glied 13 eine Unterplatte 14.1 aufweist. Die Unterplatte 14.1 des Gliedes 13 ist im Wesentlichen U-förmig ausgebildet.

Die Unterplatte 14.1 weist Scharnieraugen 15.1, 15.2 auf. Die Scharnieraugen 15.1, 15.2 sind an den Längsrändern der Unterplatte 14.1 ausgebildet. Die Längsränder der Unterplatten 14.1 erstrecken sich quer zur Transportrichtung des Scharnierbandförderers.

Die Unterplatte 14.1 umfasst in dem dargestellten Ausführungsbeispiel mehrere beabstandet zueinander angeordnete Scharnieraugen 15.1 auf. An dem gegenüberliegenden Längsrand der Unterplatte 14.1 sind mehrere Scharnieraugen 15.2 vorgesehen. Die Scharnieraugen 15.1, 15.2 sind versetzt zueinander angeordnet, so dass bei der Verbindung zweier benachbarter Unterplatten 14.1 sich die Scharnieraugen 15.1, 15.2 miteinander abwechseln.

Durch die Scharnieraugen erstrecken sich Bolzen 16, die für die Glieder jeweils eine Achse bilden, um die die Glieder ausgelenkt werden können. Die Bolzen 16 sind bspw. mit einer nicht dargestellten Endloskette verbunden. Die Endloskette wird durch die Betätigungseinrichtung 12 betätigt, so dass ein umlaufender Betrieb des Endlosbandes ermöglicht wird.

Aus der Darstellung nach Fig. 2 ist ersichtlich, dass die Unterplatte 14.1 einen im Wesentlichen U-förmigen Querschnitt aufweist. Hierdurch wird eine hohe Eigenstabilität der Unterplatte erreicht.

Mit der Unterplatte 14.1 ist eine Oberplatte 17.1 verbunden. Die Verbindung der Oberplatte 17.1 mit der Unterplatte 14.1 ist derart, dass die Oberplatte 17.1 des Gliedes 13.1 parallel zu der Unterplatte 14.1 und senkrecht zu einer Längsrichtung L des Scharnierbandes 1 verschieblich mit der Unterplatte 14.1 verbunden ist.

Die Verbindung kann derart ausgestaltet sein, dass die Oberplatte 17.1 zumindest ein Langloch aufweist, welches sich in Längsrichtung der Oberplatte 17.1 erstreckt. Durch das Langloch erstreckt sich bspw. ein Bolzen, der mit der Unterplatte verbunden ist. Der Bolzen kann an seinem aus der Oberplatte herausragenden Abschnitt ein Gewinde aufweisen, so dass vermittels einer Mutter eine Verbindung zwischen der Unterplatte 14.1 und der Oberplatte 17.1 erreicht wird. Das Anzugsmoment der Schraube ist so gewählt, dass die Oberplatte ein gewisses Spiel aufweist.

Aus dem in der Fig. 2 dargestellten Ausführungsbeispiel ist ersichtlich, das die Oberplatte 17.1 zumindest eine Lasche 18 aufweist, die mit der Oberplatte 17.1 verbunden ist. Die Geometrie der Lasche 18 ist so gewählt, dass sich die Ränder der Lasche an den Wänden der U-förmigen Unterplatte 14.1 abstützen.

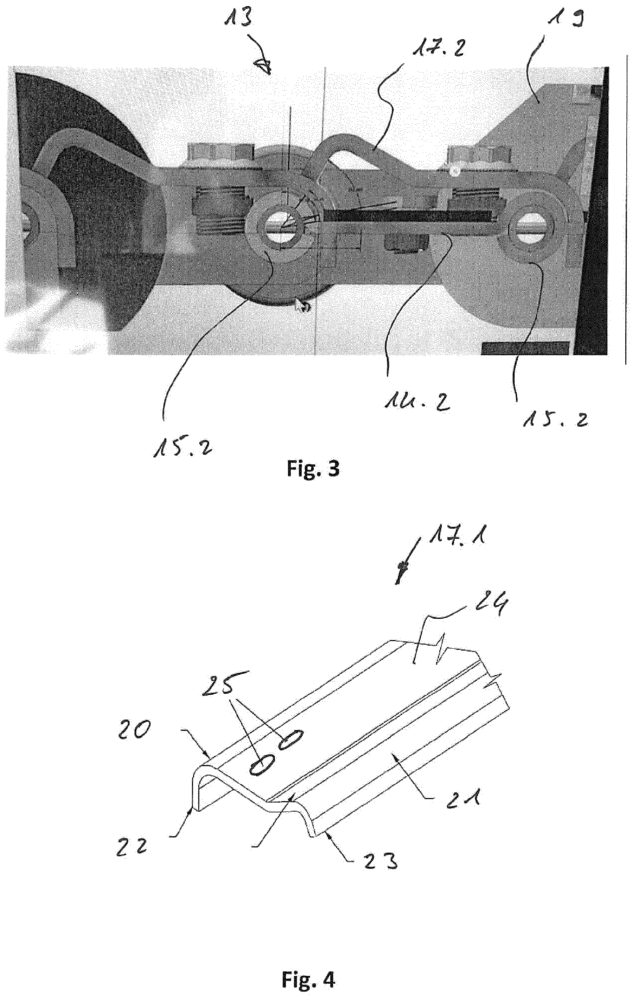

Ein weiteres Ausführungsbeispiel eines Scharnierbandes ist aus der Fig. 3 ersichtlich, welches einen Ausschnitt aus einem Scharnierband darstellt.

Der prinzipielle Aufbau des Scharnierbandes entspricht dem Aufbau des Scharnierbandes nach Fig. 2.

Auch ihn diesem Ausführungsbeispiel ist ein Glied 13 durch eine Unterplatte 14.2 und einer Oberplatte 17.2 gebildet. In dem dargestellten Ausführungsbeispiel ist die Unterplatte 14.2 im Wesentlichen gerade ausgebildet. Die Unterplatte 14.2 weist Scharnieraugen auf, durch die sich Bolzen 16 hindurch erstrecken. Im dargestellten Ausführungsbeispiel sind die Achsen zusätzlich mit Seitenborden 19 verbunden.

Die Fig. 3 zeigt, dass die Oberplatte 17.2 mit der Unterplatte 14.2 verschraubt ist. In dem dargestellten Ausführungsbeispiel weist die Unterplatte 14.1 eine zusätzliche Schicht 19 auf.

Fig. 4 zeigt eine Oberplatte 17.1 in einer perspektivischen Ansicht. Die Oberplatte 17.1 weist einen ersten Längsbereich 20 auf. Der erste Längsbereich 20 erstreckt sich in Längsrichtung eines ersten Längsrandes 22. Der erste Längsbereich 20 ist gekrümmt ausgebildet. Die Krümmung der Längsbereiche wird vorzugsweise durch Walzen hergestellt.

Aus der Fig. 4 ist des Weiteren ersichtlich, dass die Oberplatte 17.1 einen zweiten Längsbereich 21 aufweist. Der zweite Längsbereich 21 erstreckt sich in Längsrichtung eines zweiten Längsrandes 23. Der zweite Längsbereich 21 ist gekrümmt ausgebildet.

Die gekrümmt ausgebildeten Längsbereiche 20, 21 sind derart ausgebildet, dass der erste Längsbereich 20 den zweiten Längsbereich 21 einer benachbarten Platte überlappt. Hierbei liegt vorzugsweise der erste Längsrand 22 auf einer Oberseite 24 an und dient während der Bewegung des Scharnierbandförderers als Abstreifer. Die Krümmung der Oberseite des zweiten Längsbereichs entspricht vorzugsweise der Krümmung der Innenseite des ersten Längsbereichs. Dies ist jedoch nicht zwingend notwendig. Ausreichend ist, wenn die Krümmung der Oberseite des zweiten Längsbereichs 22 kleiner als die Krümmung des ersten Längsbereichs 2 ist.

Aus der Darstellung nach der Fig. 4 ist ersichtlich, dass die Platte 1 zwei Langlöcher 25 aufweist, die zur Durchführung von Schrauben dienen.

Während des Betriebs des Scharnierbandförderers gelangen heiße Abfälle auf die Oberplatten der Glieder. Insbesondere bei Bearbeitungsmaschinen, die mit einem Laser arbeiten, besteht die Gefahr, dass der Laser in Kontakt mit der Oberplatte gelangt. Hierdurch bedingt kann es zum Wärmeeintrag in die Oberplatte kommen. Die Dehnung und die Abkühlung der Oberplatte und die damit einhergehende Änderung der Länge der Oberplatte quer zur Längsrichtung des Scharnierbandes wird durch die Art der Verbindung der Oberplatte mit der Unterplatte ermöglicht, so dass es zu keiner Verformung der Oberplatte kommt. Im Hinblick darauf, dass keine bleibende Verformung der Oberplatte eintritt, wird eine hohe Standzeit des Scharnierbandförderers erreicht, da die im Wesentlichen spaltfreie Oberseite des Scharnierbandes aufrechterhalten bleibt.

### Bezugszeichenliste

- 1: Scharnierbandförderer
- 2: Aufgabebereich
- 3: Steigungsbereich
- 4: Abwurfbereich
- 5: Gestell
- 6: Gehäuse
- 7: Scharnierband
- 8: Obertrum
- 9: Untertrum
- 10: Umlenkbereich
- 11: Umlenkbereich
- 12: Betätigungseinrichtung
- 13: Gliede
- 14.1, 14.2: Unterplatte
- 15.1, 15.2: Scharnierauge
- 16: Bolzen
- 17.1: Oberplatte
- 18: Lasche
- 19: Seitenbord
- 20: erster Längsbereich
- 21: zweiter Längsbereich
- 22: erster Längsrand
- 23: zweiter Längsrand
- 24: Oberseite
- 25: Langloch

## Patentansprüche

1. Scharnierbandförderer mit
einem endlosen Scharnierband (7) und
einer mit dem Scharnierband (7) verbundenen Betätigungseinrichtung (12), wobei das Scharnierband (12) durch Glieder (13) gebildet ist, wobei jedes Glied (13) eine Unterplatte (14.1, 14.2) und eine Oberplatte (17) aufweist, wobei die Unterplatten (14.1, 14.2) gelenkig miteinander verbunden sind, und wobei die Oberplatten (17) eine spaltfreie Oberseite des Scharnierbandes (7) bilden,
**dadurch gekennzeichnet, dass**
die Unterplatte (14.1, 14.2) und die Oberplatte (17) beabstandet zueinander angeordnet sind, und die Oberplatte (17) eines Glieds (13) parallel zu der Unterplatte (14.1, 14.2) und senkrecht zu einer Längsrichtung (L) des Scharnierbandes (7) verschieblich mit der Unterplatte (14.1, 14.2) verbunden ist.

2. Scharnierbandföderer nach Anspruch 1, wobei ein Endbereich der Oberplatte (17) eines Glieds (13) fest mit der Unterplatte (14.1, 14.2) des Glieds (13) verbunden ist.

3. Scharnierbandförderer nach Anspruch 1 oder 2, wobei die Oberplatte (17) des Glieds (13) ein sich senkrecht zu einer Längsrichtung (L) des Scharnierbandes (7) erstreckendes Langloch (25) aufweist, durch welches sich ein die Oberplatte (17) und die Unterplatte (14.1, 14.2) verbindendes Befestigungsmittel erstreckt.

4. Scharnierbandförderer nach wenigstens einem der Ansprüche 1 bis 3, wobei ein Abstandshalter zwischen der Unterplatte (14.1, 14.2) und der Oberplatte (17) eines Gliedes (13) vorgesehen ist.

5. Scharnierbandförderer nach Anspruch 3 und 4, wobei sich das Befestigungsmittel durch den Abstandshalter hindurcherstreckt.

6. Scharnierbandförderer nach wenigstens einem der Ansprüche 1 bis 5, wobei die Unterplatte (14.1) eines Gliedes (13) im Querschnitt profiliert ist.

7. Scharnierbandförderer nach wenigstens einem der Ansprüche 1 bis 6, wobei die Unterplatte (14.1) eines Gliedes (13) U-förmig ausgebildet ist.

8. Scharnierbandförderer nach wenigstens einem der Ansprüche 1 bis 7, wobei die Oberplatte (17) eines Gliedes (13) Laschen (18) aufweist, die sich auf der Unterplatte (14.1) des Gliedes abstützen.

## Claims

1. Hinged belt conveyor with
an endless hinged belt (7) and
an actuating device (12) connected to the hinged belt (7),
wherein the hinged belt (12) is formed by links (13), wherein each link (13) has a lower plate (14.1, 14.2) and an upper plate (17), wherein the lower plates (14.1, 14.2) are connected to one another in an articulated manner, and wherein the upper plates (17) form a gap-free upper side of the hinged belt (7),
**characterized in that** the lower plate (14.1, 14.2) and the upper plate (17) are arranged at a distance from one another and the upper plate (17) of a link (13) is connected to the lower plate (14.1, 14.2) in a manner which allows it to be moved parallel to the lower plate (14.1, 14.2) and perpendicularly to a longitudinal direction (L) of the hinged belt (7).

2. Hinged belt conveyor according to Claim 1, wherein an end region of the upper plate (17) of a link (13) is connected firmly to the lower plate (14.1, 14.2) of the link (13).

3. Hinged belt conveyor according to Claim 1 or 2, wherein the upper plate (17) of the link (13) has a slotted hole (25) which extends perpendicularly to a longitudinal direction (L) of the hinged belt (7) and through which a fastening means connecting the upper plate (17) and the lower plate (14.1, 14.2) extends.

4. Hinged belt conveyor according to at least one of Claims 1 to 3, wherein a spacer is provided between the lower plate (14.1, 14.2) and the upper plate (17) of a link (13).

5. Hinged belt conveyor according to Claim 3 and 4, wherein the fastening means extends through the spacer.

6. Hinged belt conveyor according to at least one of Claims 1 to 5, wherein the lower plate (14.1) of a link (13) is profiled in cross section.

7. Hinged belt conveyor according to at least one of Claims 1 to 6, wherein the lower plate (14.1) of a link (13) is of U-shaped design.

8. Hinged belt conveyor according to at least one of Claims 1 to 7, wherein the upper plate (17) of a link (13) has lugs (18), which are supported on the lower plate (14.1) of the link.

## Revendications

1. Convoyeur à bande à charnières présentant
une bande à charnières (7) sans fin et
un disposition d'actionnement (12) relié à la bande à charnières (7),
dans lequel la bande à charnières (12) est formée par des maillons (13), chaque maillon (13) présentant une plaque inférieure (14.1, 14.2) et une plaque supérieure (17), les plaques inférieures (14.1, 14.2) étant reliées de manière articulée l'une à l'autre et les plaques supérieures (17) formant une face supérieure sans jeu de la bande à charnières (7), **caractérisé en ce que** la plaque inférieure (14.1, 14.2) et la plaque supérieure (17) sont agencées à une certaine distance l'une de l'autre et la plaque supérieure (17) d'un maillon (13) est reliée, parallèlement à la
plaque inférieure (14.1, 14.2) et perpendiculairement à une direction longitudinale (L) de la bande à charnières (7), de manière mobile à la plaque inférieure (14.1, 14.2).

2. Convoyeur à bande à charnières selon la revendication 1, dans lequel une zone d'extrémité de la plaque supérieure (17) d'un maillon (13) est reliée de manière fixe à la plaque inférieure (14.1, 14.2) du maillon (13).

3. Convoyeur à bande à charnières selon la revendication 1 ou 2, dans lequel la plaque supérieure (17) du maillon (13) présente un trou oblong (25) s'étendant perpendiculairement à une direction longitudinale (L) de la bande à charnières (7), à travers lequel s'étend une moyen de fixation reliant la plaque supérieure (17) et la plaque inférieure (14.1, 14.2).

4. Convoyeur à bande à charnières selon au moins l'une des revendications 1 à 3, dans lequel un écarteur est prévu entre la plaque inférieure (14.1, 14.2) et la plaque supérieure (17) d'un maillon (13).

5. Convoyeur à bande à charnières selon la revendication 3 et 4, dans lequel le moyen de fixation s'étend à travers l'écarteur.

6. Convoyeur à bande à charnières selon au moins l'une des revendications 1 à 5, dans lequel la plaque inférieure (14.1) d'un maillon (13) est profilée en coupe transversale.

7. Convoyeur à bande à charnières selon au moins l'une des revendications 1 à 6, dans lequel la plaque inférieure (14.1) d'un maillon (13) est réalisée en forme de U.

8. Convoyeur à bande à charnières selon au moins l'une des revendications 1 à 7, dans lequel la plaque supérieure (17) d'un maillon (13) présente des pattes (18) qui s'appuient sur la plaque inférieure (14.1) du maillon.
